# FASCICULE DE BREVET EUROPEEN

(11) **EP 1 700 727 B1**
(45) Date de publication et mention de la délivrance du brevet: **13.04.2011**
(21) Numéro de dépôt: 06110451.9
(22) Date de dépôt: 27.02.2006
(51) Int. Cl.: B60J 1/20

(54) **Dispositif d'occultation, pour véhicule automobile, à élément d'occultation complémentaire, et véhicule automobile correspondant**
Sonnenschutz für ein Motorfahrzeug, mit komplementärem Schutz und korrespondierendes Motorfahrzeug
Sun blind for motor vehicle, with complentary blind and corresponding motor vehicle

(30) Priorité: 08.03.2005 FR 0502323
(43) Date de publication de la demande: 13.09.2006
(73) Titulaire: Advanced Comfort Systems France SAS - ACS France, 79300 Bressuire (FR)
(72) Inventeur: Fourel, Pascal, 35400 Saint-Malo (FR)
(74) Mandataire: Bioret, Ludovic

(56) Documents cités:
- EP-A- 0 703 106
- DE-A1- 19 603 099
- DE-U1-202004 020 177
- FR-A- 2 749 878
- US-A- 5 595 229
- US-A1- 2001 022 452

## Description

Le domaine de l'invention est celui des véhicules automobiles. Plus précisément, l'invention concerne l'occultation d'une surface dans un véhicule automobile.

Une surface à occulter, selon l'invention, peut notamment être une surface vitrée (vitre latérale, pare-brise, vitre de custode, pavillon en verre,...). L'invention peut également être utilisée pour l'occultation d'un toit ouvrant, ou pour assurer une fonction de cache-bagages, par exemple.

Plus particulièrement, l'invention concerne la mise en oeuvre de dispositifs d'occultation pour occulter des surfaces non rectangulaires. Par exemple, l'invention s'applique dans le cas d'une vitre, par exemple de pare-brise, présentant un bord galbé qui ne peut pas être efficacement couvert pas un store à enrouleur, dont le bord défmi par la barre de tirage est rectiligne.

On a déjà développé de nombreuses solutions pour occulter diverses surfaces à occulter dans un véhicule automobile. Le document US 2001/0022452 divulgue notamment un pare-soleil muni d'éléments latéraux mobiles. La technique la plus classique est sans doute celle du store à enrouleur. De nombreuses techniques ont été proposées, pour adapter cette technique au cas de vitres trapézoïdales. On a également proposé diverses solutions pour décaler la toile, combiner plusieurs toiles,...

Ces solutions sont généralement complexes à mettre en oeuvre, relativement encombrantes, parfois coûteuses, et au final mal adaptées à l'occultation de zones de petite taille, de forme complexe, par exemple arrondie, que l'on trouvera notamment à l'extrémité d'une zone à occulter.

L'invention a notamment pour objectif de pallier ces inconvénients de l'art antérieur.

Plus précisément, un objectif de l'invention est de fournir une technique d'occultation d'une surface à occulter dans un véhicule automobile, qui permette d'assurer une occultation simple et efficace d'une petite zone, par exemple une zone d'extrémité ne pouvant pas être couverte par un élément d'occultation principal (tel que, par exemple, un store à enrouleur).

Un autre objectif de l'invention est de fournir une telle technique, qui soit simple à mettre en oeuvre, et notamment qui ne nécessite pas de manipulation supplémentaire complexe pour un utilisateur.

L'invention a également pour objectif de fournir une telle technique, qui soit simple à fabriquer, peu coûteuse et de faible poids.

Encore un objectif de l'invention est de fournir une telle technique, qui garantisse cependant que l'ensemble des moyens d'occultation soient complètement escamotés, lorsqu'ils ne sont pas utilisés.

Ces objectifs, ainsi que d'autres qui apparaîtront par la suite, sont atteints selon l'invention à l'aide d'un dispositif d'occultation d'au moins une portion d'une surface d'un véhicule automobile, comprenant au moins un élément rigide mobile entre au moins une position de repos et une position d'occultation.

Selon l'invention, ledit élément rigide porte au moins un élément d'occultation complémentaire monté mobile dans ledit élément rigide, de façon que ledit élément d'occultation complémentaire soit :
- escamoté au moins en partie dans un logement prévu à cet effet dans ledit élément rigide, dans ladite position de repos ;
- déployé au moins en partie en dehors dudit logement, sous l'effet de moyens de rappel, dans ladite position d'occultation.

Il est ainsi possible de couvrir, de façon automatique et efficace, une zone d'extrémité qui ne peut pas être couverte par l'élément d'occultation principal, sans manipulation particulière.

Selon une application préférentielle de l'invention, ledit élément rigide est une barre de tirage d'un store à enrouleur. Dans ce cas, ledit élément d'occultation complémentaire couvre avantageusement une zone de ladite surface non couverte par ledit store, dans ladite position d'occultation, par exemple dans le prolongement de la barre de tirage.

De façon avantageuse, ledit élément d'occultation complémentaire est monté pivotant autour d'un axe de rotation solidaire dudit élément rigide.

Ledit élément d'occultation complémentaire peut alors avantageusement présenter un doigt destiné à coopérer avec une butée solidaire dudit véhicule, pour contrôler la rotation dudit élément d'occultation complémentaire autour dudit axe de rotation.

On obtient ainsi un mécanisme simple et efficace.

Selon une première approche de l'invention, lesdits moyens de rappel tendent à amener ledit élément d'occultation complémentaire dans ladite position d'occultation.

Dans ce cas, ladite butée est préférentiellement placée de façon à agir sur ledit doigt lorsque ledit dispositif d'occultation est dans une position repliée.

Selon une seconde approche de l'invention, lesdits moyens de rappel tendent à amener ledit élément d'occultation complémentaire dans ladite position de repos.

Dans ce cas, ladite butée est préférentiellement placée de façon à agir sur ledit doigt lorsque ledit dispositif d'occultation est dans une position pliée.

Selon un aspect avantageux de l'invention, ledit élément d'occultation complémentaire peut présenter (au moins lorsqu'il est déployé) une forme incurvée destinée à coïncider avec une zone incurvée similaire d'une surface vitrée dudit véhicule.

Dans un mode de réalisation particulier de l'invention, le dispositif peut comprendre deux éléments d'occultation complémentaires symétriques.

Lesdits éléments d'occultation complémentaires peuvent être montés sur une unique barre de tirage.

Selon un autre mode de réalisation avantageux, lesdits éléments d'occultation complémentaires sont montés chacun sur une barre de tirage distincte, associée chacune à une toile de store.

Dans un mode de réalisation avantageux de l'invention, le dispositif de l'invention est destiné à occulter un pare-brise, par exemple en se déployant de base en haut, ou la partie supérieure d'un pare-brise et/ou d'un pavillon vitré.

L'invention concerne également les véhicules automobiles comprenant au moins un dispositif d'occultation tel que décrit ci-dessus.D'autres caractéristiques et avantages de l'invention apparaîtront plus clairement à la lecture de la description suivante d'un mode de réalisation préférentiel, donné à titre de simple exemple illustratif et non limitatif, et des dessins annexés parmi lesquels :
- la figure 1 illustre un exemple de surface à occulter à laquelle s'applique l'invention, en l'occurrence une portion de pavillon vitré (ou le cas échéant la partie supérieure du pare-brise se prolongeant en partie vers le pavillon) ;
- la figure 2 illustre la mise en oeuvre de l'invention, appliquée à la surface à occulter de la figure 1, à l'aide de deux stores à enrouleur dont les barres de tirage sont équipées chacune d'un volet complémentaire selon l'invention ;
- les figures 3a et 3b présentent plus précisément une des barres de tirage de la figure 2, selon un premier mode de réalisation, respectivement en position ouverte et en position fermée ;
- la figure 4 présente, en perspective, le volet et la barre de tirage des figures 3a et 3b ;
- les figures 5a et 5b présentent une barre de tirage du dispositif de la figure 2, selon un deuxième mode de réalisation ;
- la figure 6 illustre une variante de l'invention, utilisant une barre de tirage unique, toujours pour occulter la surface de la figure 1.

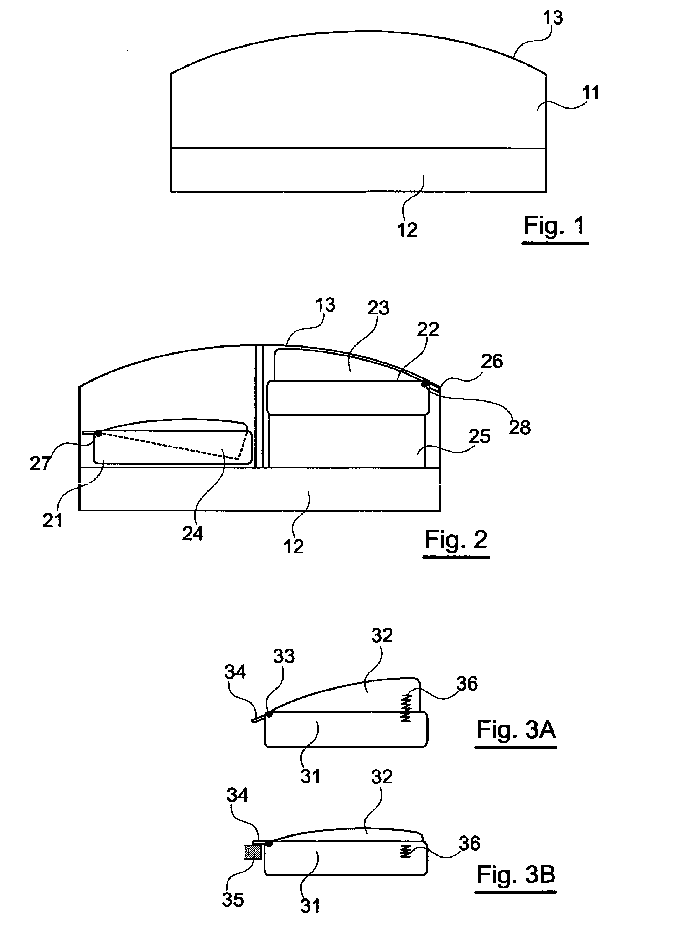

Le mode de réalisation décrit ci-après concerne l'occultation d'une zone dite clair de ciel, correspondant à une portion vitrée de pavillon, et/ou à la partie supérieure d'un pare-brise, comme illustré en figure 1.

On constate, sur cette figure, que la surface à occulter 11 s'étend d'une traverse de toit 12, de forme rectiligne, jusqu'à un bord de forme galbée 13, correspondant à la courbure supérieure de pare-brise.

Il est connu d'équiper la traverse de toit d'un ou de deux stores à enrouleur. Cependant, selon les techniques connues, il n'est pas possible d'occulter de façon efficace et parfaite (ou quasi parfaite) la surface d'extrémité au voisinage de la courbure 13.

La technique de l'invention apporte une solution simple et efficace à ce problème, en équipant la barre de tirage d'un ou plusieurs élément(s) d'occultation complémentaire(s) (appelé(s) par la suite volet(s)) qui assurent la finition de l'occultation, au-delà de la zone couverte par la toile du ou des stores à enrouleur.

En d'autres termes, ces volets prolongent la surface d'occultation en s'étendant au-delà de la zone atteinte par la barre de tirage.

La figure 2 illustre cette technique, dans un mode de réalisation mettant en oeuvre deux stores à enrouleur indépendants.

Côté gauche, le store est en position ouverte, et la barre de tirage 21 est donc en contact avec la traverse de toit 12. Côté droit, le store est en position fermée, et la toile 25 est déployée parallèlement à la portion vitrée qu'elle doit occulter.

Les deux stores à enrouleur sont de construction classique : la toile est montée sur un tube à enrouleur muni de moyens de rappel. Ils ne sont pas représentés. Ils peuvent être intégrés à la traverse, ou montés sur cette dernière. Ils peuvent être déployés et fermés de façon indépendante. Ils peuvent être manuels ou motorisés.

Sur le côté droit, comme déjà mentionné, la toile 25 est déployée. Cela a été obtenu par tirage de la barre de tirage 22.

Cette barre de tirage a été déployée au maximum, c'est-à-dire jusqu'en butée, avec le coin 26 de la surface 11. Il apparaît donc que, selon une technique classique, la zone au-delà de la barre de tirage ne serait pas occultée (alors que c'est classiquement une zone où le soleil peut s'avérer très gênant pour le conducteur ou son passager).

Selon l'invention, un volet 23 vient donc occulter cette zone d'extrémité. Ce volet 23 est monté mobile dans la barre de tirage 22, et ne se déploie que lorsque le store est mis en oeuvre. Comme cela apparaît sur la partie gauche, en position de store ouvert (replié), le volet 24 est escamoté en totalité (ou au moins pour sa plus grande partie) à l'intérieur de la barre de tirage 21 (ou parallèlement à celle-ci).

La forme du volet est définie de façon à coïncider avec le bord 13 de la surface à occulter. Il est avantageusement monté pivotant par rapport à la barre de tirage, grâce aux axes de rotation 27 et 28.

Il est important que ces volets 23 et 24 soient escamotables, pour maximiser l'ouverture, lorsque l'occultation n'est pas souhaitée. C'est pour cette raison qu'il n'est pas efficace d'utiliser une simple barre de tirage de grande surface, qui serait apte à couvrir la zone terminale.

Cet escamotage est assuré à l'aide de moyens de rappel, comme illustré pour un premier mode de réalisation par les figures 3a et 3b.

La figure 3a présente la barre de tirage 31 et son volet 32 dans la position d'occultation, et la figure 3b la barre de tirage 31 et le volet 32 dans la position escamotée.

Le volet 32 est mobile en rotation autour de l'axe 33, par rapport à la barre de tirage 31. Un ressort de compression 36 tend à amener le volet 32 en position d'occultation (figure 3a), lorsqu'aucune autre contrainte n'agit sur le volet.

Un doigt 34, s'étendant de l'autre côté de l'axe de rotation, et solidaire du volet 32, permet de contrôler l'ouverture du volet.

En effet, en position fermée, c'est-à-dire lorsque la barre de tirage est ramenée dans sa position de repos le long de la traverse 12, le doigt 34 vient en contact avec une partie fixe 35 qui déclenche l'escamotage : en agissant sur le doigt 34, cette butée entraîne le passage du volet à l'intérieur de la barre de tirage 31, en comprimant le ressort 36.

Dès que la barre de tirage est éloignée de la traverse, la butée fixe 35 n'agit plus sur le doigt 34, et le volet 32 s'ouvre, sous l'effet du ressort 36.

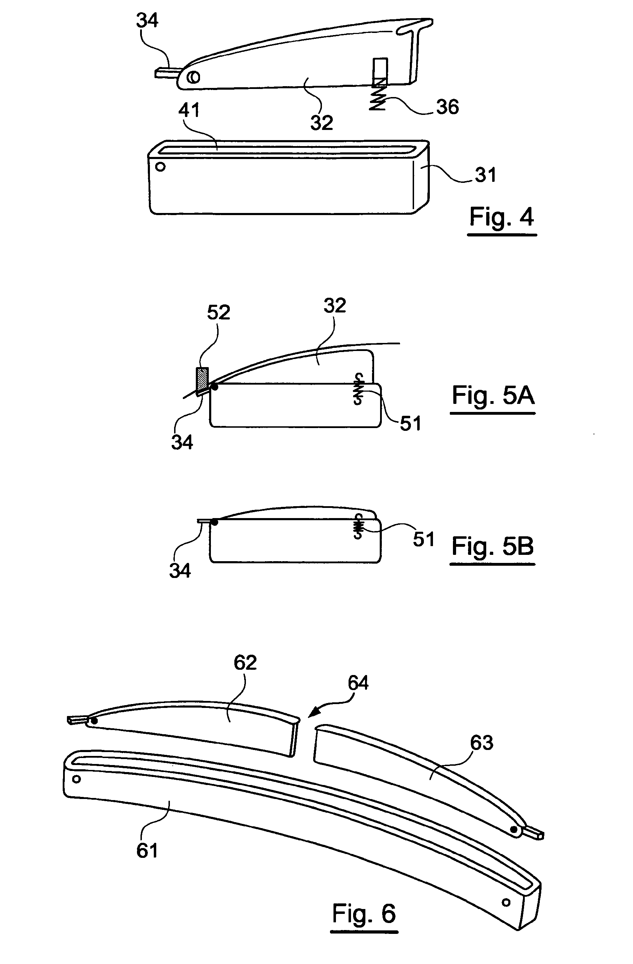

Comme on le voit plus précisément sur la figure 4, la barre de tirage 31 comprend un logement 41, dans lequel le volet 32 peut pénétrer, en position escamotée.

On notera la section en forme de T du volet, qui assure à la fois la finition de l'ensemble, et une fonction de butée en position fermée.

Selon un autre mode de réalisation, le ressort peut agir en traction, comme illustré par les figures 5a et 5b. Dans ce cas, la position adoptée par défaut, sous l'effet de la traction du ressort 51, et la position escamotée, illustrée par la figure 5b.

Le volet 32 ne se déploie que lorsque le store a été complètement déployé (figure 5a), le doigt 34 venant alors en contact avec une butée fixe 52 de déclenchement de déploiement du volet, montée au voisinage de la courbure supérieure du pare-brise 13.

On pourra choisir le premier ou le deuxième mode de réalisation, selon que l'on souhaite privilégier le clair de ciel maximum en position ouverte et/ou en position fermée, ou le paramétrage du galbe.

Selon une autre technique, illustrée par la figure 6, les deux barres de tirage 21 et 22 de la figure 2 peuvent être remplacées par une barre de tirage unique 61. Préférentiellement, dans ce cas, la barre de tirage sera munie de deux volets escamotables 62 et 63, mis en oeuvre selon une technique présentée précédemment.

Un léger espace 64 sera prévu, pour laisser libre une zone de passage du pied d'un rétroviseur.

On note sur cette figure 6 que la barre de tirage, et par conséquent les volets escamotables, peuvent être galbées en fonction de la forme de la surface à occulter.

Par ailleurs, bien que le mode de réalisation décrit ci-dessus concerne un pavillon, il est clair que la même technique peut être mise en oeuvre pour d'autres surfaces vitrées, pour un cache-bagages, un toit ouvrant,...

En outre, l'invention ne se limite pas à une mise en oeuvre dans une barre de tirage d'un store à enrouleur, mais peut être adaptée à d'autres types de dispositif d'occultation mettant en oeuvre un rideau ou des palettes d'occultation.

En particulier, ils peuvent être adaptés à une palette pare-soleil de pare-brise, par exemple pour occulter un bord latéral de pare-brise.

Par ailleurs, bien qu'illustré de façon pleine, les volets peuvent être réalisés de plusieurs manières. En effet, ils peuvent être réalisés par exemple en matière plastique, avantageusement dans le même matériau que la barre de tirage.

Selon un autre mode de réalisation, ils peuvent être formés d'un cadre, à l'intérieur duquel un tissu est tendu.

On peut également prévoir que ces volets soient moulés dans une forme prédéterminée, de façon à être « à mémoire de forme ». Dans ce cas, ils peuvent prendre une position essentiellement plane en position escamotée, et suivre un galbe souhaité en position déployée.

## Revendications

1. Dispositif d'occultation d'au moins une portion d'une surface (11) d'un véhicule automobile, comprenant au moins un élément rigide (21, 22 ; 31 ; 61) mobile entre au moins une position de repos et une position d'occultation, ledit élément rigide portant au moins un élément d'occultation complémentaire (23, 24 ; 32 ; 62, 63) monté mobile dans ledit élément rigide, de façon que ledit élément d'occultation complémentaire soit :
- escamoté au moins en partie dans un logement (41) prévu à cet effet dans ledit élément rigide, dans ladite position de repos ;
- déployé au moins en partie en dehors dudit logement, sous l'effet de moyens de rappel (36 ; 51), dans ladite position d'occultation,
**caractérisé en ce que** ledit élément rigide (21, 22 ; 31 ; 61) est une barre de tirage d'un store à enrouleur (25), et **en ce que** ledit élément d'occultation complémentaire (23, 24 ; 32 ; 62, 63) couvre une zone de ladite surface non couverte par ledit store (25), dans ladite position d'occultation.

2. Dispositif d'occultation selon la revendication 1, **caractérisé en ce que** ledit élément d'occultation complémentaire (23, 24 ; 32 ; 62, 63) est monté pivotant autour d'un axe de rotation (27, 28) solidaire dudit élément rigide.

3. Dispositif d'occultation selon la revendication 2, **caractérisé en ce que** ledit élément d'occultation complémentaire (23, 24 ; 32 ; 62, 63) présente un doigt (34) destiné à coopérer avec une butée (35 ; 52) solidaire dudit véhicule, pour contrôler la rotation dudit élément d'occultation complémentaire autour dudit axe de rotation (27, 28).

4. Dispositif d'occultation selon l'une quelconque des revendications 1 à 3, **caractérisé en ce que** lesdits moyens de rappel (36) tendent à amener ledit élément d'occultation complémentaire dans ladite position d'occultation.

5. Dispositif d'occultation selon la revendication 3, **caractérisé en ce que** ladite butée (35) est placée de façon à agir sur ledit doigt (34) lorsque ledit dispositif d'occultation est dans une position repliée.

6. Dispositif d'occultation selon l'une quelconque des revendications 1 à 3, **caractérisé en ce que** lesdits moyens de rappel (51) tendent à amener ledit élément d'occultation complémentaire dans ladite position de repos.

7. Dispositif d'occultation selon la revendication 3, **caractérisé en ce que** ladite butée (52) est placée de façon à agir sur ledit doigt (34) lorsque ledit dispositif d'occultation est dans une position pliée.

8. Dispositif d'occultation selon l'une quelconque des revendications 1 à 7, **caractérisé en ce que** ledit élément d'occultation complémentaire (23, 24 ; 32 ; 62, 63) présente une forme incurvée destinée à coïncider avec une zone incurvée similaire d'une surface vitrée dudit véhicule.

9. Dispositif d'occultation selon l'une quelconque des revendications 1 à 8, **caractérisé en ce qu'**il comprend deux éléments d'occultation complémentaires symétriques (62, 63).

10. Dispositif d'occultation selon la revendication 9, **caractérisé en ce que** lesdits éléments d'occultation complémentaires (62, 63) sont montés sur une unique barre de tirage (61).

11. Dispositif d'occultation selon la revendication 9, **caractérisé en ce que** lesdits éléments d'occultation complémentaires sont montés chacun sur une barre de tirage distincte, associée chacune à une toile de store.

12. Dispositif d'occultation selon l'une quelconque des revendications 1 à 11, **caractérisé en ce qu'**il est destiné à occulter un pare-brise, ou la partie supérieure d'un pare-brise et/ou d'un pavillon vitré.

13. Véhicule automobile comprenant au moins un dispositif d'occultation d'au moins une portion d'une surface dudit véhicule automobile, comprenant au moins un élément rigide mobile entre au moins une position de repos et une position d'occultation, ledit élément rigide portant au moins un élément d'occultation complémentaire (23, 24 ; 32 ; 62, 63) monté mobile dans ledit élément rigide, de façon que ledit élément d'occultation complémentaire soit :
- escamoté au moins en partie dans un logement (41) prévu à cet effet dans ledit élément rigide, dans ladite position de repos ;
- déployé au moins en partie en dehors dudit logement, sous l'effet de moyens de rappel (36 ; 51), dans ladite position d'occultation ;
**caractérisé en ce que** ledit élément rigide (21, 22 ; 31 ; 61) est une barre de tirage d'un store à enrouleur (25), et **en ce que** ledit élément d'occultation complémentaire (23, 24 ; 32 ; 62, 63) couvre une zone de ladite surface non couverte par ledit store (25), dans ladite position d'occultation.

## Claims

1. Device for screening at least a portion of a surface (11) of a motor vehicle, comprising at least one rigid element (21, 22; 31; 61) which can be moved between at least one rest position and a screening position, the rigid element carrying at least one complementary screening element (23, 24; 32; 62, 63) which is movably mounted in the rigid element so that the complementary screening element is:
- at least partially retracted in a housing (41), which is provided to this end in the rigid element, in the rest position;
- deployed at least partially out of the housing, under the action of return means (36; 51), in the screening position, **characterised in that** the rigid element (21, 22; 31; 61) is a pulling bar of a roller blind (25), and **in that** the complementary screening element (23, 24; 32; 62, 63) covers a zone of the surface which is not covered by the blind (25) in the screening position.

2. Screening device according to claim 1, **characterised in that** the complementary screening element (23, 24; 32; 62, 63) is mounted for pivoting about a rotation axis (27, 28) which is fixedly joined to the rigid element.

3. Screening device according to claim 2, **characterised in that** the complementary screening element (23, 24; 32; 62, 63) has a member (34) which is intended to co-operate with a stop (35; 52) which is fixedly joined to the vehicle, in order to control the rotation of the complementary screening element about the rotation axis (27, 28).

4. Screening device according to any one of claims 1 to 3, **characterised in that** the return means (36) tend to move the complementary screening element into the screening position.

5. Screening device according to claim 3, **characterised in that** the stop (35) is positioned so as to act on the member (34) when the screening device is in a folded position.

6. Screening device according to any one of claims 1 to 3, **characterised in that** the return means (51) tend to return the complementary screening element into the rest position.

7. Screening device according to claim 3, **characterised in that** the stop (52) is positioned so as to act on the member (34) when the screening device is in a folded position.

8. Screening device according to any one of claims 1 to 7, **characterised in that** the complementary screening element (23, 24; 32; 62, 63) has an inwardly curved shape which is intended to correspond to a similar inwardly curved zone of a glass surface of the vehicle.

9. Screening device according to any one of claims 1 to 8, **characterised in that** it comprises two complementary symmetrical screening elements (62, 63).

10. Screening device according to claim 9, **characterised in that** the complementary screening elements (62, 63) are mounted on a single pulling bar (61).

11. Screening device according to claim 9, **characterised in that** the complementary screening elements are each mounted on a separate pulling bar, each of which is associated with a blind web.

12. Screening device according to any one of claims 1 to 11, **characterised in that** it is intended to cover a windscreen, or the upper portion of a windscreen and/or a glass roof.

13. Motor vehicle comprising at least one device for screening at least one portion of a surface of the motor vehicle, comprising at least one rigid element which can be moved between at least one rest position and a screening position, the rigid element carrying at least one complementary screening element (23, 24; 32; 62, 63) which is movably mounted in the rigid element so that the complementary screening element is:
- at least partially retracted in a housing (41) which is provided to this end in the rigid element, in the rest position;
- deployed at least partially out of the housing, under the action of return means (36; 51), in the screening position; **characterised in that** the rigid element (21, 22; 31; 61) is a pulling bar of a roller blind (25), and **in that** the complementary screening element (23, 24; 32; 62, 63) covers a zone of the surface which is not covered by the blind (25) in the screening position.

## Patentansprüche

1. Verdunkelungsvorrichtung für mindestens einen Abschnitt einer Fläche (11) eines Kraftfahrzeugs, die mindestens ein starres Element (21, 22; 31; 61) aufweist, das zwischen mindestens einer Ruhestellung und einer Verdunkelungsstellung beweglich ist, wobei das starre Element mindestens ein ergänzendes Verdunkelungselement (23, 24; 32; 62, 63) trägt, das in dem starren Element beweglich derart montiert ist, dass das ergänzende Verdunkelungselement:
- mindestens zum Teil in einer Aufnahme (41), die dazu in dem starren Element vorgesehen ist, in die Ruhestellung eingefahren wird;
- mindestens zum Teil aus der Aufnahme unter der Einwirkung von Rückholmitteln (36; 51) in die Verdunkelungsstellung ausgefahren wird,
**dadurch gekennzeichnet, dass** das starre Element (21, 22; 31; 61) eine Zugstange eines Rollladens (25) ist, und dass das ergänzende Verdunkelungselement (23, 24; 32; 62, 63) einen Bereich der nicht von dem Rollladen (25) in der Verdunkelungsposition abgedeckten Fläche abdeckt.

2. Verdunkelungsvorrichtung nach Anspruch 1, **dadurch gekennzeichnet, dass** das ergänzende Verdunkelungselement (23, 24; 32; 62, 63) um eine Rotationsachse (27, 28), die mit dem starren Element fest verbunden ist, schwenkend montiert ist.

3. Verdunkelungsvorrichtung nach Anspruch 2, **dadurch gekennzeichnet, dass** das ergänzende Verdunkelungselement (23, 24; 32; 62, 63) einen Finger (34) aufweist, der dazu bestimmt ist, mit einem Anschlag (35; 52), der fest mit dem Fahrzeug verbunden ist, zusammenzuwirken, um die Drehung des ergänzenden Verdunkelungselements um die Rotationsachse (27, 28) zu steuern.

4. Verdunkelungsvorrichtung nach einem der Ansprüche 1 bis 3, **dadurch gekennzeichnet, dass** die Rückholmittel (36) dazu tendieren, das ergänzende Verdunkelungselement in die Verdunkelungsposition zu bringen.

5. Verdunkelungsvorrichtung nach Anspruch 3, **dadurch gekennzeichnet, dass** der Anschlag (35) derart angeordnet ist, dass er auf den Finger (34) einwirkt, wenn die Verdunkelungsvorrichtung in einer zurückgezogenen Stellung ist.

6. Verdunkelungsvorrichtung nach einem der Ansprüche 1 bis 3, **dadurch gekennzeichnet, dass** die Rückholmittel (51) dazu tendieren, das ergänzende Verdunkelungselement in die Ruhestellung zu bringen.

7. Verdunkelungsvorrichtung nach Anspruch 3, **dadurch gekennzeichnet, dass** der Anschlag (52) derart platziert ist, dass er auf den Finger (34) einwirkt, wenn die Verdunkelungsvorrichtung in einer zurückgefalteten Position ist.

8. Verdunkelungsvorrichtung nach einem der Ansprüche 1 bis 7, **dadurch gekennzeichnet, dass** das ergänzende Verdunkelungselement (23, 24; 32; 62, 63) eine gebogene Form aufweist, die dazu bestimmt ist, mit einem ähnlichen gebogenen Bereich einer verglasten Fläche des Fahrzeugs zusammenzufallen.

9. Verdunkelungsvorrichtung nach einem der Ansprüche 1 bis 8, **dadurch gekennzeichnet, dass** sie zwei ergänzende symmetrische Verdunkelungselemente (62, 63) aufweist.

10. Verdunkelungsvorrichtung nach Anspruch 9, **dadurch gekennzeichnet, dass** die ergänzenden Verdunkelungselemente (62, 63) auf eine einzige Zugstange (61) montiert sind.

11. Verdunkelungsvorrichtung nach Anspruch 9, **dadurch gekennzeichnet, dass** die ergänzenden Verdunkelungselemente jeweils auf eine getrennte Zugstange montiert sind, die jeweils mit einem Rollladentuch verbunden ist.

12. Verdunkelungsvorrichtung nach einem der Ansprüche 1 bis 11, **dadurch gekennzeichnet, dass** sie dazu bestimmt ist, eine Windschutzscheibe oder den oberen Teil einer Windschutzscheibe und/oder eines verglasten Fahrzeughimmels zu verdunkeln.

13. Kraftfahrzeug, das mindestens eine Verdunkelungsvorrichtung mindestens eines Abschnitts einer Fläche des Kraftfahrzeugs aufweist, die mindestens ein starres Element aufweist, das zwischen mindestens einer Ruhestellung und einer Verdunkelungsstellung beweglich ist, wobei das starre Element mindestens ein ergänzendes Verdunkelungselement (23, 24; 32; 62, 63) trägt, das in dem starren Element derart beweglich montiert ist, dass das ergänzende Verdunkelungselement:
- mindestens zum Teil in eine Aufnahme (41), die dazu in dem starren Element vorgesehen ist, in die Ruhestellung eingefahren wird;
- mindestens zum Teil aus der Aufnahme unter der Einwirkung von Rückholmitteln (36; 51) in die Verdunkelungsposition ausgefahren wird;
**dadurch gekennzeichnet, dass** das starre Element (21, 22; 31; 61) eine Zugstange eines Rollladens (25) ist, und dass das ergänzende Verdunkelungselement (23, 24; 32; 62, 63) einen Bereich der von dem Rollladen (25) in der Verdunkelungsposition nicht abgedeckten Fläche abdeckt.
